(19)

Europäisches
Patentamt
European
Patent Office
Office européen
des brevets

(11)    **EP 3 265 381 B1**

(12)    **EUROPEAN PATENT SPECIFICATION**

(45) Date of publication and mention
of the grant of the patent:
**10.06.2020   Bulletin 2020/24**

(51) Int Cl.:
**B64C 1/36** *(2006.01)*      **B64C 3/10** *(2006.01)*
**H01Q 1/28** *(2006.01)*      **B64C 39/02** *(2006.01)*

(21) Application number: **16709503.3**

(22) Date of filing: **02.03.2016**

(86) International application number:
**PCT/GB2016/050539**

(87) International publication number:
**WO 2016/139465 (09.09.2016 Gazette 2016/36)**

(54) **HIGH ALTITUDE AIRCRAFT WING GEOMETRY**

HÖHENFLUGZEUGFLÜGELGEOMETRIE

GÉOMÉTRIE D'AILE D'AÉRONEF VOLANT À HAUTE ALTITUDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.03.2015   GB 201503612**

(43) Date of publication of application:
**10.01.2018   Bulletin 2018/02**

(73) Proprietor: **Stratospheric Platforms Limited
Fort Anne
Douglas IM1 5PD
Isle of Man (GB)**

(72) Inventors:
• **DAVIDSON, Peter
Douglas IM1 5PD
Isle of Man (GB)**

• **KICKERT, Reiner
Douglas IM1 5PD
Isle of Man (GB)**

(74) Representative: **Willett, Christopher David et al
Nash Matthews LLP
24 Hills Road
Cambridge CB2 1JP (GB)**

(56) References cited:
**EP-A2- 2 281 747        DE-A1-102012 017 533
US-A- 2 518 843         US-A- 4 662 588
US-A1- 2011 046 821**

## Description

Technical Field

The invention relates to the wing geometry of high altitude aircraft, which deliver information services at altitude, including telecommunications, observation, astronomical and positioning services.

Background to the invention

High altitude platforms (aircraft and lighter than air structures situated from 10 to 35 km altitude) - HAPS have been proposed to support a wide variety of applications. Areas of growing interest are for telecommunication, positioning, observation and other information services, and specifically the provision of high speed Internet, e-mail, telephony, televisual services, games, video on demand, and global positioning.

High altitude platforms possess several advantages over satellites as a result of operating much closer to the earth's surface, at typically around 20 km altitude. Geostationary satellites are typically situated in around 40,000 km orbits, and low earth orbit satellites are usually at around 600 km to 3000 km. Satellites exist at lower altitudes but their lifetime is very limited with consequent economic impact.

The relative nearness of high altitude platforms compared to satellites results in a much shorter time for signals to be transmitted from a source and for a reply to be received (the "latency" of the system. Moreover, high altitude aircraft are within the transmission range for standard mobile phones for signal power and signal latency. Any satellite is out of range for a terrestrial mobile phone network.

High altitude platforms also avoid the rocket propelled launches needed for satellites, with their high acceleration and vibration, as well as high launch failure rates with attendant impact on satellite cost.

Payloads on high altitude platforms can be recovered easily and at modest cost compared to satellite payloads. Shorter development times and lower costs result from less demanding testing requirements.

US patent 7,046,934 discloses a high altitude balloon for delivering information services in conjunction with a satellite.

US 2004118969 A1, WO 2005084156 A2, US 5518205 A, US 2011/0031354 A1 US 2014/0252156 A1, disclose particular designs of high altitude aircraft.

US 4,662,588 discloses a delta-wing and a tapered -wing platform comprising an antenna in the wing structure.

However, there are numerous and significant technical challenges to providing reliable information services from high altitude platforms. Reliability, coverage and data capacity per unit ground area are critical performance criteria for mobile phone, device communication systems, earth observation and positioning services.

Government regulators usually define the frequencies and bandwidth for use by systems transmitting electromagnetic radiation. The shorter the wavelength, the greater the data rates possible for a given fractional bandwidth, but the greater the attenuation through obstructions such as rain or walls, and more limited diffraction which can be used to provide good coverage. These constraints result in the choice of carrier frequencies of between 0.7 and 5 GHz in most parts of the world with typically a 10 to 200 MHz bandwidth.

There is a demand for high data rates per unit ground area, which is progressively growing larger from current levels of the order 1-10 Mbps / square kilometre to many orders of magnitude greater than this over the next decades.

To provide high data rates per unit ground area, high altitude unmanned long endurance (HALE) aircraft, or free- flying or tethered aerostats, need to carry large antenna(s) to distinguish between closely based transceivers on the ground. A larger diameter antenna leads to a smaller angular resolution of the system, hence the shorter the distance on the ground that the system can resolve. Ultimately the resolution is determined by the "Rayleigh criterion" well known to those skilled in the art. The greater the antenna resolution, the higher the potential data rates per unit ground area are.

However fitting large diameter antenna into the wing or fuselage structures that would normally be used for high altitude aircraft brings significant aerodynamic penalties.

To avoid the costs and lack of availability that would be engendered by short flight endurance for HALE aircraft, endurance of many weeks or months rather than hours is necessary. In such aircraft, energy is supplied by solar cells with a battery storage system to provide power overnight, or by Hydrogen fuel. This energy is used for the propulsion system and payload power. Aerodynamic drag consumes energy and reduces the available payload energy, and can curtail the aircraft operating speed; altitude and latitude. It is therefore highly desirable to minimize the aircraft aerodynamic drag.

A key problem with such antenna carrying aircraft is therefore to ensure that the aircraft structure can accommodate the relevant antenna geometries whilst having a low aerodynamic drag to minimize energy requirements, as well as an appropriate distributed weight distribution to minimize structural weight.

There are various forms of antennas that have advantages when mounted on a HALE aircraft. Of particular utility are phased array antennas and horn antennas. Both forms of antenna can provide low weight, high gain systems that transmit or receive electromagnetic radiation of suitable wavelengths for communication to ground based systems such as mobile phones, computers or base stations. In the context of this invention "ground" includes the surface of water as well as land and so includes the seas.

For high data rates to and from the ground, the axis of the beam should normally be approximately vertical to minimize the distance between the plane and the ground-based receivers or transmitters to which it is communicating. Within antenna clusters, composing several distinct antennas pointing in different directions, an individual antenna may transmit or receive at a significant angle to the vertical, but the axis of the clusters will normally be close to the vertical, to ensure the distance between the aircraft and ground based transceivers is minimized.

It is therefore desirable to have lightweight large diameter horizontal antenna structures located in the aircraft in such a fashion as to minimize drag. Conventionally, with lower altitude aircraft, if an antenna is sufficiently large not to fit into the aircraft structure, they are externally mounted on the aircraft fuselage. See US patent 6844855. Elaborate folding structures have been proposed to allow antenna or antennas to be deployed and drag increased only when needed. See US patent 5357259A. If the antenna is sufficiently small to fit into the aircraft structure, then an enclosing structure transparent to the required electromagnetic radiation can be designed to minimize aerodynamic drag as for example referred to in US patent 3,953,857.

However, for high data rates and or high resolution between mobile user equipment possessing transmitters or receivers, for example mobile phones, computers, equipment carried on vehicles, there is a need for a wing design that provides low aerodynamic drag and weight for a suitably large antenna enclosure, with large wing spans particularly for wing spans of greater than 30m and more particularly for still larger wing spans of 50m or more.

A similar need arises for connection to fixed user equipment where for particular reasons such as cost or location it is impractical to connect to fibre networks. Communication to user equipment on aircraft and satellites can also require such large antennas. This invention enables these large antennas to be carried by HALE aircraft in a more efficient manner in these characteristics than prior art.

Wing tips can be provided that are upwards or downwards orientated. In this work all wing lengths and chord calculations exclude the contribution of the wing tip length and width.

Summary of the invention

In a first aspect, the invention relates to an unmanned high altitude aircraft operating above 15 km altitude as defined in claim 1.

Such a design reduces aerodynamic drag.

According to the invention, the transmitting and/or receiving antennas comprise one or more phased arrays and/or horn antennas. Preferably the transmitting and/or receiving antennas may comprise quadridge horn, log periodics, individual Vivaldi, patch antennas, dipoles, quarter wave whip, bow tie etc.

It has been discovered that aerodynamic drag can be reduced for such an aircraft carrying an antenna by maintaining a comparable "circulation" around the wing enclosing the antenna or antennas and the wing adjacent to this wing section.

In such a wing design, three parts to the wing can be defined, firstly, the antenna "encumbered" section or sections, containing the antenna or antennas in all vertical cross - sections orientated parallel to the direction of flight, secondly various "transition" sections connecting the enclosure section(s) with thirdly, the "unencumbered" sections whose design is dominated by conventional aerodynamic and structural considerations and not primarily affected by the design of the "encumbered" section.

The concept of "circulation" referred to above is known to those skilled in the art of aerofoil and wing theory, and is defined as the line integral of the velocity field around the relevant aerofoil sections: see H Glauert "The elements of aerofoil and airscrew theory." CUP 1986 p 34. Minimum induced aerodynamic drag of a planar wing is achieved by an elliptic distribution of circulation over the wing span at a particular dynamic loading or airspeed for a specified operating altitude. Normally this airspeed will be chosen to be the cruising speed of the aircraft.

By a suitable choice of local aerofoil shape and local effective angle of attack of both the "encumbered" section, and the "transition" section, even for large antenna sizes, circulation can most preferably be kept elliptical to within twenty percent, preferably less than within ten percent, over the "encumbered" section, the "transition" section and the edge of the "unencumbered sections" adjacent to the "transition section." Calculation of aerofoil and wing circulation is familiar to those skilled in aerofoil aerodynamics, see for example, Schlichting, Truckenbrodt "Die Aerodynamik des Flugzeuges Bd II." Springer-Verlag 1969, p 9.

By maintaining a relatively elliptical circulation around the wing in this manner, the impact on the aircraft aerodynamic drag of an antenna or antennas can be minimized, where because of the size or required orientation of the antenna, it is not possible to wholly enclose the antenna or antennas within a conventional wing. Such large antenna or antennas would hitherto have resulted in a large mean wing chord length if the antenna or antennas were enclosed or substantially enclosed in the wing, or mounted externally. With a large mean wing chord length, the aerodynamic drag is increased - as will be shown below with a less "slender" wing with a lower aspect ratio than in the invention. If the antenna(s) are not substantially, preferably 90% but in general more than half enclosed within the wings or fuselage, the extra obstruction will increase aerodynamic drag as for example, in the well-known externally mounted radome of AWACS aircraft.

As is known from lifting line theory, the induced drag coefficient of a untwisted wing with elliptic planform is a function of wing lift coefficient and aspect ratio. Thomas (F Thomas, Fundamentals of Sailplane design, College Park Press 1989, page 40) describes this result specifically,

$$C_D = C_{D0} + C_L^2 / (\pi. \, e. \, AR)$$

where the terms (defined by Thomas) are as follows: $C_D$ is the drag coefficient of the aircraft, $C_{D0}$ is the drag coefficient at zero lift, $C_L$ is the wing lift coefficient, $\pi = 3.14...$, e is the Oswald span efficiency factor which depends on the wing planform induced drag, but also includes profile drag and parasitic drag, AR is the aspect ratio of the wing which is the square of the wingspan divided by the projected wing area.

Non-elliptical wing circulations can be used if the wing has twist or winglets to provide low drag. In this case it is important that by a suitable choice of local aerofoil shape and local effective angle of attack of both the "encumbered" section, and the "transition" section, even for large antenna sizes, circulation can be kept constant to within twenty percent, preferably less than within ten percent, over the "encumbered" section, the "transition" section and the edge of the "unencumbered sections" adjacent to the "transition section."

For typical HALE aircraft designs it has been found that the induced drag of the wing has a significant contribution to the overall aerodynamic drag, and slender wings of high aspect ratio are to be preferred to minimize aerodynamic drag. Lift to drag ratios at operating altitude are typically over 25:1, more typically over 35:1, and can with suitable aerofoil designs, large wingspans, and high aspect ratios, be much higher. Wingspans are typically greater than 20m, more typically greater than 25m. The Helios aircraft wingspan was 75m and even higher wingspans have been contemplated. Payloads vary substantially, from a few kg for the early Zephyr aircraft to much higher values for the Helios aircraft or the Global Observer of more than 100 kg.

Modest antenna sizes do not give a drag problem: if the antenna or antennas can be fitted into slender wing aerofoil sections with no elongation of the aerofoil chord, and the aerofoil cross section is of sufficient depth, then a conventional wing design is possible without an aerodynamic drag penalty with the antenna position being determined primarily by structural considerations.

Two separated antenna groups can be desirable to allow the aircraft transmitter and receiver functions to be separated resulting in a greater sensitivity of signal reception and / or transmission, and a more distributed load on the wing minimizing the structural loads on the wing and its weight.

Introducing one or more antenna or antenna groups into, or substantially into, the wing of the aircraft in this fashion whilst maintaining relatively elliptic circulation rates around the wing as described above, allows the additional drag to be minimized for a given size of antenna when the antenna dimensions are greater than the wing chord length would be in a rectangular or near rectangular or elliptical design.

This is illustrated in the following figures and examples.

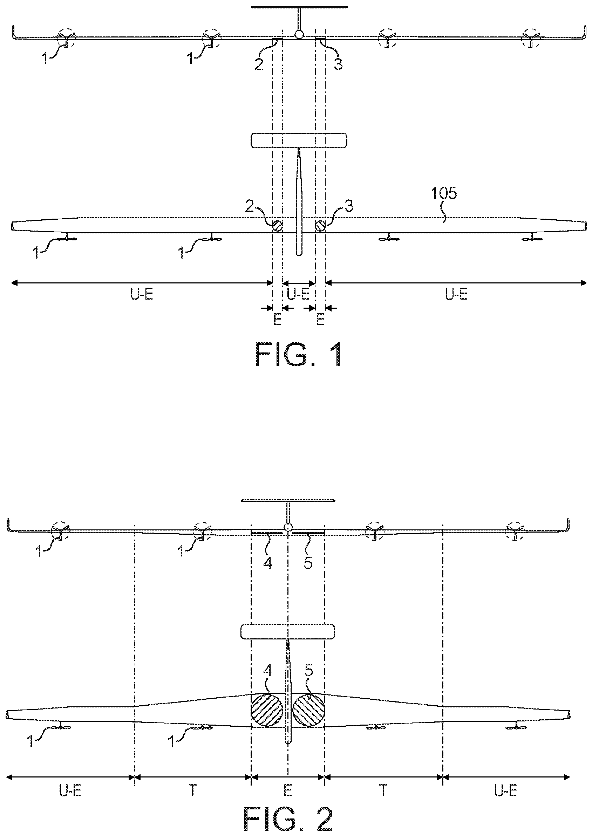

Figure 1 shows in plan and side elevation an aircraft with two circular phased arrays with an approximately constant chord length for some distance from the aircraft fuselage. The wing design is similar to the design of high performance modest Reynolds number aircraft for high performance manned gliders. The Reynolds number - familiar to those skilled in the art - is a measure of the ratio of turbulent to viscous forces concerning the relevant fluid flow. The plane thrust is provided by a plurality of propellers (1), supported by a long thin wing (105). The main wing section is of a chord length sufficiently great to accommodate the two antennas (2 and 3): it can simplify the antenna electronics and improve signal processing discrimination to have one antenna transmitting and one antenna receiving particularly if both transmission and reception are required at the same time.

Figure 2 shows in plan and side elevation an aircraft with two circular antennas (4, 5) utilizing the invention, where the diameter of the antennas is much greater than the average wing chord length. In this case, the vertical cross section where the antennas are located is also considerably greater than the average vertical cross section of the wing. There are two substantial "transition" sections (T) in addition to the encumbered (E) and unencumbered UE) wing sections.

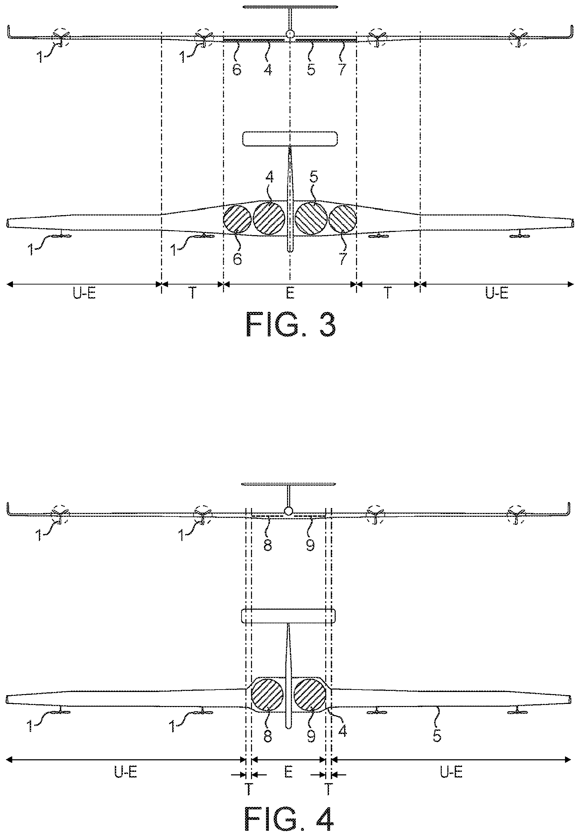

Figure 3 shows in plan and side elevation an aircraft with four circular antennas (4,5,6,7) utilizing the invention, where the diameter of the antennas is much greater than the average wing chord length. In this case, the vertical cross section where the antennas are located is also considerably greater than the average vertical cross section of the wing. There are also as in the aircraft shown in Figure 2, two substantial "transition" sections (T) in addition to the encumbered (E) and unencumbered UE) wing sections.

Figure 4 shows in plan and side elevation an aircraft with two circular antennas (8,9) utilizing the invention, where the diameter of the antennas is much greater than the average wing chord length and the transition section is short. In this case, the vertical cross section where the antennas are located is also considerably greater than the average vertical cross section of the wing.

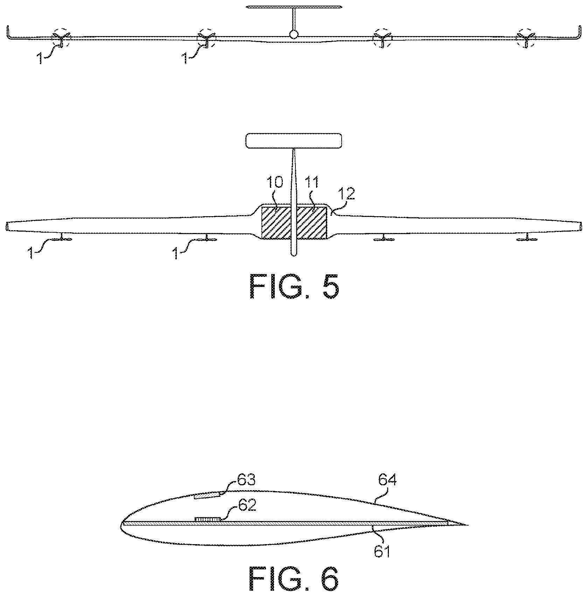

Figure 5 shows an aircraft with square antennas (10,11) utilizing the invention, rather than circular antennas otherwise similar to the aircraft shown in Figure 4.

In Figure 6 the relatively thin phased array (61) sits just below the bottom of the wing spar (62), which can be made of conducting materials being above the main electromagnetic radiation field entering or leaving the phased array (61). The wing surface (64) defines the aerofoil shape and should be of sufficiently low conductivity when situated below the phased array if the array is communicating downwards to avoid significant interference with the electromagnetic radiation transmitted or received by the antenna(s). The top of the wing spar (63) sits just below the upper surface of the wing.

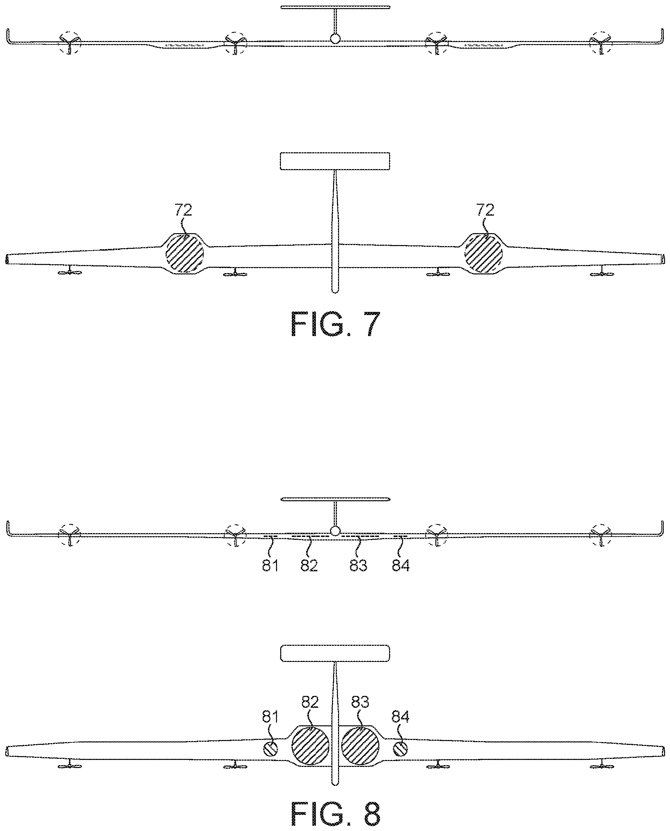

Figure 7 shows an aircraft with two separated antennas (73,74) to provide a more uniform mass distribution and reduce structural loads on the aircraft and /or to allow reduced electromagnetic interference between the antennas.

Figure 8 shows a plane with a large pair of antennas (82,83) and a small pair of antennas (81,82). Such an arrangement can be optimal if the communication to small antennas on the ground is carried out at much lower frequencies than the backhaul frequencies - communication to larger antennas on the ground linking the aircraft to a core ground based network.

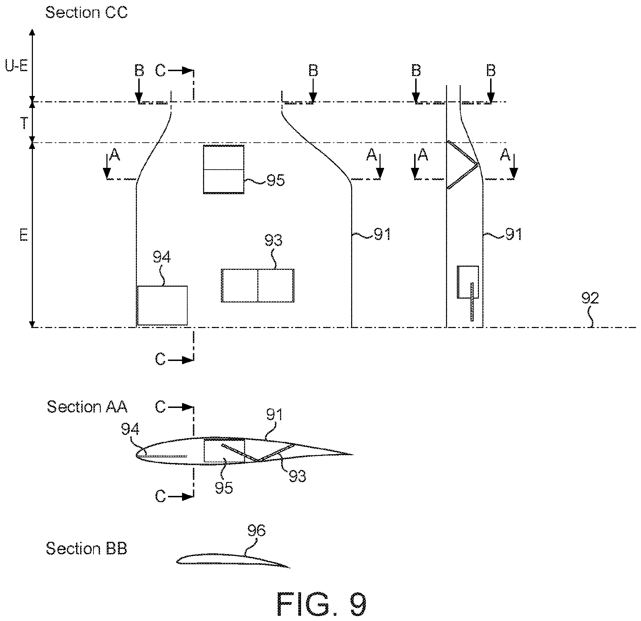

Figure 9 shows an example of a multiple antennas arrangement designed to allow an individual aircraft to communicate with a much larger area on the ground than would be possible with a flat almost horizontal phased array antenna(s). Typically, flat phased arrays only project and receive within a cone of around 60 degrees to axis of the array; normally the axis is at right angles to the plane of the array. Therefore communication to transmitters or receivers, or transceivers based at an angle more than sixty degrees to the axis of the array begins to be inadequate. This problem is exacerbated if the plane pitches or rolls and continuous communication is required. The arrangement shown is mirrored on both sides of the fuselage; the centerline of the plane (92) is shown horizontally.

A plan view and three sections (AA, BB, and CC) are shown. The encumbered (E) section (91) encloses all the antennas.

There are three sets of antennas: a single horizontal antenna (94) pointing directly down, a pair of antennas (95) allowing better communication from side to side, and a pair of antennas (93) allowing better communication forward and backwards. The antennas need usually to be sited to avoid significant interference with one another. Round, ellipsoidal or more complex shapes can be envisaged as well as an "inverted saucer" shape. The angles can be varied and larger or smaller numbers of sets of antennas can also be used.

For a given antenna projected size - the area of the antenna when viewed normally to the main plane of the antenna - to minimize aerodynamic drag, the entire antenna should usually be enclosed by the wing structure. However in some instances, the design will benefit from a modest portion of the antenna or antenna casing being outside the aerofoil cross section of the wing rather than going to the expedient of increasing the aerofoil chord length(s) in the "encumbered" section(s) of the wing. This may be because of the particular antenna shape not readily fitting in with the aerofoil section, being for example square rather than elliptical or circular, or for particular attachments to pods containing other equipment or access points or for a variety of other reasons. Usually the encumbered section will enclose a "substantial" fraction being at least 50%, preferably 80% and more preferably all of the projected area of the antenna(s).

High altitude long endurance planes fly quite slowly: typically at speeds lower than 100 m/s and more usually below 50 m/s and sometimes as slow as 15 m/s. At these velocities with the cold, low density, relatively viscous air encountered at high altitude, the wing Reynolds number is much lower than that encountered in conventional aircraft: gliders or powered vehicles. However, aerofoil sections designed for low Reynolds numbers are common in low altitude unmanned aerial vehicles, in wind turbines and other applications. Examples of such an aerofoils have been designed by for example Selig (see "New Airfoils for Small Horizontal Wind Turbines," Giguere and Selig, Trans ASME, p108, Vole 120, May 1998): particularly the aerofoils SG 6040, SG 6041, SG 6042, SG 6043, with thicknesses of respectively 16%, 10%, 10%, and 10%.

The aircraft designs described below in Table 1 show the advantages of utilizing the invention.

All cases tabulated are for the same weight of wing per unit wing area with the addition of a constant spar weight per unit width of wing. The aircraft design is for operation at a latitude of within 15 degrees of the equator, and the powers and speeds are calculated on the basis of mid - winter conditions to allow station holding throughout the year. In the base case utilizing the invention, the "encumbered "section is designed on the basis of an SG 6040 cross section with a 16% thickness to chord length, two antenna of 1.6m diameter with a weight of less than 6 kg/m$^2$ (total weight of antenna + electronics = 30kg), can be fitted into the encumbered sections having a chord length of 2m. The unencumbered sections are designed on the basis of an SG 6043 cross section.

Utilizing the invention results allows a plane of the same wingspan to either support a heavier payload and larger antenna with a similar operating speed (necessary for station-holding in many applications) than a conventional plane, or with a similar payload weight, the maximum operating speed is significantly increased.

**Table 1**

| Comparison of "classical" wing and "novel" wing designs | | | |
|---|---|---|---|
| **Design variables** | **Novel design (with invention)** | **Constant speed (classical design)** | **Constant payload (classical design)** |
| Payload power (W) | 350 | 350 | 350 |
| Overall power train efficiency | 70% | 70% | 70% |
| Battery energy (Whr/kg) | 350 | 350 | 350 |
| Aircraft altitude (m) | 18000 | 20000 | 18850 |
| Wing span (m) | 35 | 35 | 35 |
| Wing area (m$^2$) | 43.5 | 56 | 70 |
| Average wing chord length (m) | 1.2 | 1.6 | 2.0 |
| Overall lift to drag coefficient | 43 | 38 | 37 |
| Reynolds number of average wing chord length | 280,000 | 280,000 | 340,000 |
| **Outcomes** | | | |
| Payload weight (kg) | 30 | 20 | 30 |
| Aircraft speed (m/s) | 28 | 28 | 23 |
| Reduction in payload weight | - | 32% | - |
| Reduction in speed | - | - | 18% |

It can be seen that an aircraft utilizing the invention has a significantly higher payload weight (32%) than a conventional design with the same cruising speed, or a significantly higher cruising speed (18%) than planes of the same wing-span with conventional design and the same cruising speed.

This is a result of higher "induced drag" caused by the lower aspect ratio for wings of classical design, which reduces the energy available for the payload or results in lower aircraft speeds than would be desirable. The operating altitude has been optimized to reflect the different characteristics of the different designs.

It may also be desirable to maintain a similarity of circulation over a variety of airspeeds if for example low drag performance is necessary for high flying speeds as well as low.

Optionally, additional wing flaps are provided in one or more of the "encumbered," "transitions" or "unencumbered" sections that allow the circulation to maintained at a more elliptical level over the sections for a greater range of aircraft speeds.

Optionally, the flap sections are of variable relative chord length along the wing allowing a more elliptical circulation and lower drag along the length of the wing. The relative flap chord length is defined as the distance from the leading edge of the flap to the trailing edge of the aerofoil referenced to the chord length of the aerofoil at a particular distance from the fuselage centerline. It is familiar to those skilled in aerofoil aerodynamics that deflection of an aerofoils flap results in a change to the effective local angle of attack, see Schlichting, Truckenbrodt "Die Aerodynamik des Flugzeuges Bd II." Springer-Verlag 1969, p 439.

There are two main frequencies used on the plane: a relatively low frequency of between 0.5 and 5 GHz with large phased arrays which can provide uplink and down link to 'user equipment' with a suitably long wavelength such that transmission and reception can be through rain and building walls of a reasonable thickness and secondly a higher frequency than the uplink / downlink utilizing a much larger bandwidth and smaller arrays that is used for backhaul to and from the plane. These phased arrays can have beam axes that are approximately vertical, or be made up of clusters of arrays whose axes are approximately vertical, or be clusters some of whose axes are approximately vertical and some of whom which are not.

**Claims**

1. An unmanned high altitude long endurance aircraft comprising a wing structure (105), a fuselage and a tail, operating above 15 km, with transmitting and/or receiving antennas (4, 5, 6, 7, 8, 9, 10, 11, 61, 73, 74, 82, 83, 93, 94, 95), each antenna enclosed or more than half enclosed on a projected area basis normal to the plane of the antenna, in the wing structure (105), where the chord length of the wing section enclosing the antenna or antennas, which are phased arrays or horn antennas, is at least 30 percent greater than the mean wing chord length, and the wing surface adjacent to the antennas in the path of the electromagnetic radiation being received or transmitted by the antennas is substantially composed of material relatively transparent to this radiation.

2. An aircraft according to claim 1 where the wing span is greater than 30m.

3. An aircraft according to any previous claim where the beam axis from each antenna - when the aircraft is in level flight - is substantially vertical, preferably within 20 degrees of the vertical.

4. An aircraft according to any one of claims 1 or 2 with two or more antennas where the beam axis from some or all of the antennas is at more than 20 degrees to the vertical, when the aircraft is in level flight.

5. An aircraft as described in any of the previous claims with separate antennas used for transmitting and for receiving electromagnetic radiation.

6. An aircraft according to any one of the previous claims with one or more additional antennas operating at a higher frequency - normally at least 30%, preferably at least 100% greater than the mean operating frequency of the other antennas - but sufficiently small to fit into the wing structure without the "encumbered" wing section chord length of the one or more additional antennas being greater than 10% of the chord length of the minimum unencumbered wing section chord length adjacent to the one or more additional antennas.

7. An aircraft according to any one of the previous claims where the integral of the velocity field around the wing section containing the antenna is within 30%, preferably within 20% and most preferably within 10% of an elliptical shape within one antenna's width along the wing at the cruising speed of the aircraft at its elevated operating altitude or a particular airspeed chosen to maximise the aircraft endurance.

8. An aircraft according to any one of claims 1 to 6 where the integral of the velocity field around the wing section containing the antenna is within 30%, preferably within 20% and most preferably within 10% of that within one antenna's width along the wing at the cruising speed of the aircraft at its elevated operating altitude or a particular airspeed chosen to maximise the aircraft endurance.

9. An aircraft according to any one of the previous claims which is used for communication to ground based user equipment such as mobile phones, computers, wearable devices, and vehicles, including both land and sea based equipment.

10. An aircraft according to any one of claims 1 to 9, which is used for communication to aircraft based user equipment.

11. An aircraft according to any one of the previous claims carrying one or more circular, elliptical, polygonal or indented phased array antennas or antennas whose perimeter follows closely - to within 20% of the radial distance from the antenna centroid of any of the antenna shapes described.

12. An aircraft according to any of the previous claims which comprises a processing system operatively connected to the at least one antenna and adapted to receive external instructions via an antenna to modify additional signals for communication and not for radar.

13. A fleet of aircraft according to claim 12, working cooperatively to communicate together with a user antenna on user equipment at lower altitude than the aircraft.

**Patentansprüche**

1. Unbemanntes Langstreckenhöhenluftfahrzeug, das eine Flügelstruktur (105), einen Rumpf und ein Heck umfasst und oberhalb von 15 km mit Sende- und/oder Empfangsantennen (4, 5, 6, 7, 8, 9, 10, 11, 61, 73, 74, 82, 83, 93, 94, 95) arbeitet, wobei jede Antenne auf einer vorstehenden Flächenbasis senkrecht zur Ebene der Antenne in der Flügelstruktur (105) eingeschlossen oder mehr als halb eingeschlossen ist, die Sehnenlänge des Flügelabschnitts, der die Antenne oder die Antennen, die phasengesteuerte Gruppenantennen oder Hornantennen sind, einschließt, mindestens 30 Prozent größer als die mittlere Flügelsehnentiefe ist und die Flügeloberfläche, die an die Antennen im Pfad der elektromagnetischen Strahlung, die durch die Antennen empfangen oder gesendet wird, angrenzt, im Wesentlichen aus für diese Strahlung relativ durchlässigem Material gebildet ist.

2. Luftfahrzeug nach Anspruch 1, wobei die Flügelspanne größer als 30 m ist.

3. Luftfahrzeug nach einem vorhergehenden Anspruch, wobei die Strahlachse von jeder Antenne - wenn sich das Luftfahrzeug im horizontalen Flug befindet - im Wesentlichen vertikal ist, bevorzugt innerhalb von 20 Grad der Vertikale.

4. Luftfahrzeug nach einem der Ansprüche 1 oder 2 mit zwei oder mehr Antennen, wobei die Strahlachse einer oder aller Antennen sich bei mehr als 20 Grad zur Vertikale befindet, wenn sich das Luftfahrzeug im horizontalen Flug befindet.

5. Luftfahrzeug nach einem der vorhergehenden Ansprüche wobei zum Senden bzw. zum Empfangen elektromagnetischer Strahlung getrennte Antennen verwendet werden.

6. Luftfahrzeug nach einem der vorhergehenden Ansprüche, mit einer oder mehreren zusätzlichen Antennen, die bei einer höheren Frequenz - normalerweise mindestens 30 %, bevorzugt mindestens 100 % größer als die mittlere Betriebsfrequenz der weiteren Antennen - arbeiten, jedoch ausreichend klein sind, um in die Flügelstruktur zu passen, ohne dass die "belastete" Flügelabschnittssehnenlänge der einen oder mehreren zusätzlichen Antennen größer als 10 % der Sehnenlänge der minimalen unbelasteten Flügelabschnittssehnenlänge, die der einen oder den mehreren zusätzlichen Antennen benachbart ist, ist.

7. Luftfahrzeug nach einem der vorhergehenden Ansprüche, wobei das Integral des Geschwindigkeitsfelds um den Flügelabschnitt, der die Antenne enthält, innerhalb von 30 %, bevorzugt innerhalb von 20 % und am stärksten bevorzugt innerhalb von 10 % einer Ellipsenform in einer Antennenbreite entlang des Flügels bei der Reisegeschwindigkeit des Luftfahrzeugs bei seiner erhöhten Flughöhe oder einer bestimmten Fluggeschwindigkeit, die gewählt wurde, um die Höchstflugdauer des Luftfahrzeugs zu maximieren, liegt.

8. Luftfahrzeug nach einem der Ansprüche 1 bis 6, wobei das Integral des Geschwindigkeitsfelds um den Flügelabschnitt, der die Antenne enthält, innerhalb von 30 %, bevorzugt innerhalb von 20 % und am stärksten bevorzugt innerhalb von 10 % dessen in einer Antennenbreite entlang des Flügels bei der Reisegeschwindigkeit des Luftfahrzeugs bei seiner erhöhten Flughöhe oder einer bestimmten Fluggeschwindigkeit, die gewählt wurde, um die Höchstflugdauer des Luftfahrzeugs zu maximieren, liegt.

9. Luftfahrzeug nach einem der vorhergehenden Ansprüche, das zur Kommunikation mit einem bodenseitigen Anwendergeräten wie z. B. Mobiltelefonen, Computern, tragbaren Vorrichtungen und Fahrzeugen, die sowohl landgestützte als auch seegestützte Geräte umfassen, verwendet wird.

10. Luftfahrzeug nach einem der Ansprüche 1 bis 9, das zur Kommunikation mit einem luftfahrzeugbasierten Anwendergerät verwendet wird.

11. Luftfahrzeug nach einem der vorhergehenden Ansprüche, das eine oder mehrere kreisförmige, elliptische, polygonale oder als phasengesteuerte Anordnung vorgesehene Antennen oder Antennen, deren Umfang eng - bis innerhalb von 20 % der radialen Entfernung vom Antennenschwerpunkt jeder der beschriebenen Antennenformen - folgt, trägt.

**12.** Luftfahrzeug nach einem der vorhergehenden Ansprüche, das ein Verarbeitungssystem umfasst, das mit der mindestens einen Antenne funktionstechnisch verbunden ist und ausgelegt ist, externe Anweisungen über eine Antenne zu empfangen, um zusätzliche Signale zur Kommunikation und nicht für Radar zu modifizieren.

**13.** Flotte von Luftfahrzeugen nach Anspruch 12, die zusammenarbeiten, um gemeinsam mit einer Anwenderantenne an einem Anwendergerät bei einer niedrigeren Höhe als das Luftfahrzeug zu kommunizieren.

**Revendications**

**1.** Aéronef sans pilote de haute altitude à longue autonomie, comprenant une structure d'aile (105), un fuselage et une queue, évoluant au-dessus de 15 km, pourvu d'antennes émettrices et/ou réceptrices (4, 5, 6, 7, 8, 9, 10, 11, 61, 73, 74, 82, 83, 93, 94, 95), chaque antenne étant renfermée, ou plus qu'à moitié renfermée sur la base d'une aire projetée normalement au plan de l'antenne, dans la structure d'aile (105), la longueur de corde du tronçon d'aile renfermant l'antenne ou les antennes, consistant en des réseaux à commande de phase ou des antennes cornets, étant d'au moins 30 pour cent supérieure à la longueur de corde d'aile moyenne, et la surface d'aile adjacente aux antennes dans le trajet du rayonnement électromagnétique reçu ou émis par les antennes étant essentiellement composée de matériau relativement transparent vis-à-vis de ce rayonnement.

**2.** Aéronef selon la revendication 1, dans lequel l'envergure d'aile est supérieure à 30 m.

**3.** Aéronef selon l'une quelconque des revendications précédentes, dans lequel l'axe de faisceau depuis chaque antenne - lorsque l'aéronef vole en palier - est essentiellement vertical, de préférence au plus à 20 degrés de la verticale.

**4.** Aéronef selon l'une quelconque des revendications 1 ou 2 pourvu d'au moins deux antennes, l'axe de faisceau depuis certaines ou la totalité des antennes se trouvant à plus de 20 degrés de la verticale lorsque l'aéronef vole en palier.

**5.** Aéronef tel que décrit dans l'une quelconque des revendications précédentes pourvu d'antennes distinctes utilisées pour l'émission et pour la réception d'un rayonnement électromagnétique.

**6.** Aéronef selon l'une quelconque des revendications précédentes pourvu d'une ou de plusieurs antennes supplémentaires fonctionnant à une fréquence plus élevée - normalement au moins 30 %, de préférence au moins 100 % supérieure à la fréquence de fonctionnement moyenne des autres antennes - mais suffisamment petites pour se loger dans la structure d'aile sans que la longueur de corde du tronçon d'aile "entravé" des une ou plusieurs antennes supplémentaires ne dépasse 10 % de la longueur de corde de la longueur de corde minimale du tronçon d'aile non entravé avoisinant les une ou plusieurs antennes supplémentaires.

**7.** Aéronef selon l'une quelconque des revendications précédentes, dans lequel l'intégrale du champ de vitesse autour du tronçon d'aile contenant l'antenne s'approche au plus de 30 %, de préférence au plus de 20 % et idéalement au plus de 10 % d'une forme elliptique au sein de la largueur d'une antenne le long de l'aile à la vitesse de croisière de l'aéronef à son altitude d'évolution élevée ou une vitesse-air particulière choisie de façon à maximiser l'autonomie de l'aéronef.

**8.** Aéronef selon l'une quelconque des revendications 1 à 6, dans lequel l'intégrale du champ de vitesse autour du tronçon d'aile contenant l'antenne s'approche au plus de 30 %, de préférence au plus de 20 % et idéalement au plus de 10 % de celle au sein de la largueur d'une antenne le long de l'aile à la vitesse de croisière de l'aéronef à son altitude d'évolution élevée ou une vitesse-air particulière choisie de façon à maximiser l'autonomie de l'aéronef.

**9.** Aéronef selon l'une quelconque des revendications précédentes, utilisé pour la communication avec un équipement utilisateur au sol tel que des téléphones mobiles, des ordinateurs, des dispositifs portables sur soi et des véhicules, notamment un équipement ainsi bien terrestre que marin.

**10.** Aéronef selon l'une quelconque des revendications 1 à 9, utilisé pour la communication avec un équipement utilisateur à bord d'un aéronef.

**11.** Aéronef selon l'une quelconque des revendications précédentes, transportant une ou plusieurs antennes-réseaux à commande de phase circulaires, elliptiques, polygonales ou échancrées ou antennes dont le périmètre épouse - au plus de 20 % de la distance radiale depuis le barycentre d'antenne - l'une quelconque des formes d'antenne décrites.

12. Aéronef selon l'une quelconque des revendications précédentes, comprenant un système de traitement relié fonctionnellement à l'au moins une antenne et adapté à recevoir, par le biais d'une antenne, des instructions externes visant à modifier des signaux supplémentaires pour la communication et non pour un radar.

13. Flotte d'aéronefs selon la revendication 12, collaborant afin de communiquer entre eux au moyen d'une antenne utilisateur sur un équipement utilisateur à une altitude plus basse que celle des aéronefs.

FIG. 1

FIG. 2

FIG. 3

FIG. 4

FIG. 5

FIG. 6

FIG. 7

FIG. 8

Section CC

FIG. 9

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7046934 B
- US 20040118969 A1
- WO 2005084156 A2
- US 5518205 A
- US 20110031354 A1
- US 20140252156 A1
- US 4662588 A
- US 6844855 B
- US 5357259 A
- US 3953857 A

**Non-patent literature cited in the description**

- **H GLAUERT.** The elements of aerofoil and airscrew theory. *CUP,* 1986, 34
- **SCHLICHTING, TRUCKENBRODT.** Die Aerodynamik des Flugzeuges Bd II. Springer-Verlag, 1969, 9
- **F THOMAS.** Fundamentals of Sailplane design. College Park Press, 1989, 40
- **GIGUERE ; SELIG.** New Airfoils for Small Horizontal Wind Turbines. Trans ASME, May 1998, vol. 120, 108
- **SCHLICHTING, TRUCKENBRODT.** Die Aerodynamik des Flugzeuges Bd II. Springer-Verlag, 1969, 439